# EUROPEAN PATENT APPLICATION

(11) **EP 4 523 971 A2**
(43) Date of publication of application: **19.03.2025**
(21) Application number: 24197779.2
(22) Date of filing: 31.08.2024
(51) Int. Cl.: B60R 13/08, B32B 5/02, B32B 5/08, D04H 1/435, D04H 1/541, D04H 1/559, B32B 5/26

(54) **SYNTHETIC FIBER PANEL AND PROCESS TO OBTAINING IT**

(30) Priority: 14.09.2023 IT 202300018882
(71) Applicant: OMI Group srl, 80121 Napoli (NA) (IT)
(72) Inventor: D'Alessandro, Giuseppe, 84014 Nocera Inferiore (SA) (IT)

(57) **Abstract**

The present invention concerns a porous mat in synthetic polyester fibres to for the production of structural elements with sound-absorbing characteristics for the automotive sector and more generally for industry.

The invention also includes a process for producing plates or panels from raw materials of suitably selected and laminated polyester fibres.

The result is a panel with the capacity to be a thermoformable with high characteristics of lift and surface modeling, allowing direct coupling with thermoplastic aesthetic fabrics and eliminating the bonding glues now required for traditional materials and maintaining the high porosity characteristics required for the phono-absorbing property.

The invention is presented as a thermoplastic product, eco-sustainable and real protection of the environment and humans.

## Description

The subject of this invention application is a porous sheet or panel made of synthetic fibers for the production of interiors insulating structural elements for means of locomotion, especially motor vehicles, and process for obtaining it.

### State of the Art

The interior of a car must be appropriately insulated from annoying sounds, which can be transmitted through the chassis and body of the motor vehicle. These sounds come from the tires as they interact with the road surface, from the external wind or from the operation of the engine and other mechanical parts of the motor vehicle. These sounds have very different frequencies. A variety of materials have been used in the manufacture of insulating panels or padding, and they are used to dampen, to block, to absorb or to attenuate unwanted noises. Most commonly, these panels are made of recycled textile fibers and expanded materials. While it is recognized by those skilled in the art that a sound absorber is most effective with a thickness corresponding to one-quarter of the wavelength of the frequency of the sound to be absorbed, practical considerations of space and cost may limit the actual thickness employed. In automobiles, a practical upper limit on the thickness of the insulation composite is often thought to be about 25 mm (one inch), since the panel tends to be dense and heavy.

It is known in the art to apply a sound insulation barrier, sometimes called a heavy layer or viscoelastic layer, in addition to the fibrous or foam material, for an improved overall sound reduction efficiency. See, for example, U.S. Patent Nos. 4,056,161; 4,966,799; 5,266,143; 5,068,001; and 6,109,389 . The use of thermosetting resins such as melamine, phenol aldehydes, and urea resins are taught in U.S. Patent No. 3,536,557, and dense filled vinyl plastisols are described in U.S. Patent No. 4,035,215. U.S. Patent No. 4,131,664 teaches how to create the heavy or dense barrier layer. Also, a polymeric material for sound blocking is described in U.S. Patent No. 3,424,270.

A drawback of the sound-dampening materials described in many of these patents is that they contribute significantly to the weight of the vehicle. Those skilled in the art of acoustics say that the best sound barrier is a heavy, dense material such as lead foil. However, a few small pinholes or cracks can compromise even such a thick, heavy sound barrier.

Instead of sound barriers, sound absorbers have been used. Sound absorbers are typically significantly less dense than barrier materials and can actually be quite porous. As a result, their acoustic performances are less affected by holes and crevices. In addition to absorbing sound energy, other mechanisms of reduction of perceived sound include the damping and the sound waves blocking.

In applications with numerous structural discontinuity and junctions of the acoustic panels, such as in an automobile, a sound absorbing material can actually outperform a barrier material, as the seals around the discontinuity, must be nearly perfect for the barrier material to be highly effective at blocking incident sound. Typically in vehicle manufacturing, fibrous panels are die-cut and/or stamped under heat and pressure to provide a contour that supports the shape and to conform uniquely to the sheet metal of each make and model of vehicle. The stamping operation may involve a heated mould and cold material, or the acoustical material itself is heated up and then pressed into a cold mould.

The criteria for selection in the production and use of composites, padding or sound-absorbing and blocking sound panels, have been the cost of the raw material itself, the cost of processing and the ease with which the panels can be custom-shaped to precisely fit the structural surfaces of the vehicle. Other important technical parameters have been the acoustic properties of such fibrous materials, their weight and their durability for an extended service during which they may be subjected to wide variations in heat and humidity and most likely to exposure to solvents or adhesives.

The current regulatory landscape still allows the use of obsolete products derived from traditional technologies that still allow the use, albeit limited, of solvents based on phenolic resins or similar products inside porous thermosetting materials, which in compliance with the technical characteristics are placed in areas close to and sometimes bordering the limits of health and environmental protection.

Reducing the size and weight of vehicles has long been known to be effective in improving consumption per km. However, so far there have been no economically viable options for incorporating lighter sound insulation materials while maintaining the expected level of sound insulation performance.

It is proposed here with the present Invention to offer a lighter and more efficient alternative for sound insulation for the vehicle sector and not least a strong improvement from the point of view of the environmental compatibility of the panels and the production process thereof.

### Aims and advantages of the invention

The aim of the present invention is to obtain a semi-finished porous panel in recyclable synthetic fibres, eco-sustainable, mouldable by thermoforming in a convective/radiative oven and cold mould with direct aesthetic coupling of polyester TNT, for the creation of self-supporting structural elements that are sound-absorbent without glues or solvents, free from mould and resistant to combustion.

Another aim of the present invention, in accordance with the previous one, is to obtain a panel or sheet with a high homogeneity of stratification and distribution of the interstitial type thermo-melting fibres between the layers, and the union of the individual layers to form a porous but compact mat having behaviour and structural characteristics similar to a multilayer.

Another aim of the present invention in accordance with the previous one is the production process necessary to obtain the said panel or sheet, both in the form of semi-finished product and as a finished piece ready for application in the sector of interest

Further characteristics and advantages will be more clear from the detailed description of a preferred but not exclusive form of execution, as illustrated by way of example but not limitation in the attached drawing in which:

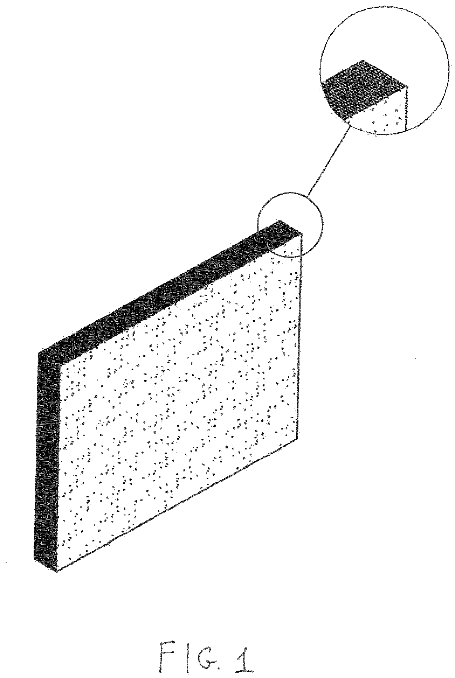

Fig. 1, schematically shows a multilayer panel or sheet.

The benefits and advantages of the present invention are achieved by a multilayer panel consisting of a composite polyester fibrous material having acoustic, fireproof and heat-insulating properties. In one aspect, the panel defines one or more fibrous layers, each of which has a fibrous mass of substantially uniform density and thickness whose fibres are retained by their thermoplastic bond.

The materials used to make the panel object of the present invention are for the core, the polyester flake mixed with low melting polyester fibers (LMF), while the external finish is in non-woven fabric (TNT) composed of polyester, viscose and oxidized carbon fiber.

In particular, the soul (core) of the panel is made up in percentage of
(A): 50% PES flake (polyethylene terephthalate + perfluoroalkoxy) of black color, with a title of 17 denier and length (cut) 60 mm
(B): 50% PES fiber type LMF (Low melting) of white color, 4.4 denier and length 51 mm.

While the Skin (the external surface for both faces) is made of a (C): non-woven TNT fabric, density 110 g/m2 with Hydro-Oil-Diesel-Repellent (IOG) and Flame Retardant (FR) treatment
composed of:
(d): 80% Polyester Fiber (PES) in black, 1.4 denier and length 51 mm.
(e) 15% Viscose Staple (VIS) in black, 1.4 denier and length 32 mm.
(f) 5% Recycled Oxidized Carbon Fiber (PanOX)

It should be noted that by "skin" we mean the dense portion on the external surface of the multilayer relative to the total density of the final product of approximately 5% of the total thickness of the printed panel and is semi-impermeable to water.

In this regard, the term "fusible binder fibers" is chosen to imply that they are such that they are capable of resolidification when the fibers are cooled, i.e., fibers that can be softened and/or melted at molding temperatures.

"Staple fibers" means fibers that do not soften sufficiently or melt at a selected molding temperature to substantially engage in the formation of the skin to be resolidified, i.e., the staple fibers are not resolidified in the skin.

It is also within the scope of the invention a process for producing semi-finished sheets or panels from the aforementioned raw materials.

The production process consists of the following phases:
preparation of a homogeneous mixture (A) + (B) (50% black polyester fibers, 17 denier and 60 mm long and 50% low melting polyester fibers (LMF), 4.4 denier and 51 mm long), and distribution of the bicomponent fibers using numerically controlled Apritoi type machines with calibrated and controlled weighing at origin;
further mixing of (A) + (B) in a metal box with pneumatic transport of the fibers to the Carding station;
pneumatic loading into a Carding machine for spinning process and formation of the (A) + (B) layer;

In the double-stage Lapping XXX phase, the overlapping layers are processed in synchrony with the motion of layer stratification and overlapping of the non-woven fabric;
the high precision allows for the creation of a product with high layering homogeneity and thermo-melting characteristics of the interstitial type between the layers; coupling of the non-woven fabric (C), ( d) + (e) +(f ), on the two sides of the layers of the composite mat (A) + (B) .

Once the composite (A)+ (B) + (C) is obtained, we move on to the thermobonding with heating in an air drying oven, at a temperature of 190 ° to 210 ° ;
heating in an air oven allows the union of the individual layers to form a porous but compact mat with behavior and structural characteristics similar to multilayer; follows the cooling of the mat and the thermofixing obtained with a calender cooled with water at 5 °;
finally, the cutting into sheets is performed by means of a guillotine cutter according to the desired size.

The slabs or panels obtained vary from a minimum size of 250 x 250 x 10 mm to a maximum size of 2500 x2500 x50 mm.

The technical characteristics of the panels once made are:
- Surface weight: IDL 064, 1000 ÷ 2000 g/m²
- Thickness: IDL 063, 10 ÷ 50 mm
- Thermal conductivity: ISO 12667 W/mK 0.0329
- Flammability: ISO 3795, Class SE - ECE118
- Air permeability / (Thickness): ISO 9237, 4200 - 3500 / (80) - (50) l/m²s
- Fog: VDA 278, 320 ppm
- Odor: VDA 270, class 2(C2) / 2(C3)
- Mold: Fiat 7-M8607, absent
- Temp. Stability: up to 120°C

Compared to competing products, the panel layered obtained, presents significant improvements:
- High mechanical resistance characteristics following thermoforming, such as to allow the creation of structural parts with self-supporting characteristics;
- High sound absorbing characteristics, permanent even after thermoforming thanks to the maintenance of the porosity characteristics of the fibres;
- 100% recyclable in the polyester-based product chain;
- Free of glues or solvents that may emit carcinogenic, harmful or allergenic substances;
- Does not produce emissions and does not release environmental residues during the manufacturing process;
- breathable with a reduced and controlled air flow through it that does not allow the production of mould;
- Material with combustion resistance characteristics;
- Finishing during the forming phase with with direct aesthetic coupling of polyester TNT on both sides, with Hydro-Gas Oleo-Repellent treatment;

To obtain the finished product, i.e. a thermoformed component for the automotive sector, and in general for the transport and industrial sector, starting from the semi-finished sheets or panels, the production process continues with the following phases:
1) Loading of the semi-finished panel into a drying / heating oven, with Convective / Radiation technology, with opposing hot plates, with independent emission zones;
2) Heating of the panel with an appropriate cycle Times / Temperatures / Irradiation zones, regulated by the process parameters:

For example, the parameters chosen for heating a semi-finished panel of 120 kg/m2 are:
- Average upper plate temperature 320°C
- Upper radiation regulation with inverse proportional rings: 50% Center, 100% Edge
- Average lower plate temperature 220°C
- Lower radiation regulation with inverse proportional rings: 30% Center, 80% Edge
- Distance Upper Hot Plate / Panel = 80mm
- Distance Lower Hot Plate / Panel = 15mm
- Cycle time 180 seconds

3) Automatic exit of the hot panel from the oven, by means of a chain belt, with an average upper surface temperature of approximately 190°C
4) Positioning of the hot panel in a thermoregulated mold placed under the press, modeled on the basis of the design of the component to be made;
5) Possible application and direct coupling of aesthetic fabrics or laminates, of different nature, on the component before forming in the press;
6) Pressing and forming, in the mold, of the panel for the time necessary for the dimensional thermal stabilization of the component; simultaneous cutting of the edges and/or plugs, out of the figure.

As can be seen, the production process, object of the present invention, allows a drastic reduction of phases and materials, optimizing times and costs of manufacturing standard components for interiors, and at the same time maintaining equal and superior characteristics compared to the panels of the state of the art, in terms of:
- Structural load-bearing capacity
- Thermal insulation
- Sound absorption
- Aesthetic finish

The invention is susceptible to modifications and variations all falling within the scope of the inventive concept. Furthermore, all the details are replaceable by technically equivalent elements.

## Claims

1. Semi finished multilayer synthetic fiber panel having the core of the panel made up of layers of polyester staple and low melting polyester fibres, heat-bonded with the external surface layer, in non-woven fabric,TNT, **characterized by** the fact that the composition of the panel core in percentage, is the following:
(A): 50% PES staple, polyethylene terephthalate + perfluoroalkoxy, black colour, 17 denier count and fiber lenght 60 mm.
(B): 50% PES fiber type LMF, low melting, white colour, 4.4 denier count and fiber length 51 mm;
while the leather layer, i.e. the external surface on both sides in non-woven fabric, TNT, (C) has a density of 110 g/m2 with Hydro-Oil-Gas-Repellent (IOG) and Flame Retardant (FR) treatment on both sides and is composed of:
(d): 80% Polyester Fiber (PES) in black colour, 1.4 denier count and fiber length 51 mm.
(e) : 15% Viscose Staple (VIS) black in color 1.4 denier count and fiber lenght 32 mm .
(f) : 5% oxidized carbon fiber (PanOX)

2. Semi finished multilayer synthetic fiber panel as in claim 1) **characterized by** the fact that the technical characteristics of the panel are:
Thermal conductivity: ISO 12667 W/mK 0.0329;
Flammability: ISO 3795, Class SE - ECE118;
Air permeability / (Thickness): ISO 9237, 4200 - 3500 / (80) - (50) l/m²s
Fog: VDA278, 320 ppm;
Odor: VDA 270, class 2(C2) / 2(C3)
Mold: Fiat 7-M8607, absent;
Characteristic stable at a temperature of 120°C;
surface weight: IDL 064, 1000 = 2000 g/m²;
thickness: IDL 063, 10 ÷ 50 mm.

3. Semi finished multilayer synthetic fiber panel as in claim 1) **characterized by** the fact that the sheets or panels vary from a minimum size of 250 x 250 x 10 mm. to a maximum size of 2500 x2500 x50 mm.

4. Semi finished multilayer synthetic fiber panel as per claim 1) **characterized by** the fact that it is free of glues or solvents, breathable, with a reduced and controlled air flow through its fibres, and recyclable

5. Process for obtaining the semi-finished multilayer panel in synthetic fibers **characterized by** the fact that the production of the semi-finished sheets or panels starts from raw materials in polyester fibers (A) +(B), and (C) in TNT , in which :
(A) means : 50% PES staple, polyethylene terephthalate + perfluoroalkoxy, black colour, 17 denier count and 60 mm fiber lenght.
(B) means: 50% PES fiber type LMF, low melting, white colour, 4.4 denier count and fiber length 51 mm;
(C) means: the external surface has a density of 110 g/m2 with Hydro-Oil-Gas-Repellent (IOG) and Flame Retardant (FR) treatment on both sides, and is composed of:
(d): 80% Polyester Fiber (PES) in black colour, 1.4 denier count and fiber length 51 mm.
(e): 15% Viscose Staple (VIS) black in color 1.4 denier count and 32 mm fiber lenght.
(f): 5% Recycled oxidized carbon fiber (PanOX)

6. Process for obtaining a semi-finished multilayer panel in synthetic fibers as in claim 5) **characterized by** the fact that the production process consists of the following phases:
preparation of the homogeneous mixture (A)+(B), in which (A) means 50% of 50% PES staple, polyethylene terephthalate + perfluoroalkoxy, black colour, 17 denier count and fiber length of 60 mm, and (B) means 50% of PES fiber type LMF, low melting, white colour, 4.4 denier count and fiber length 51 mm;
distribution of the two-component fibers using numerically controlled opener-type machines with calibrated and controlled weighing at the origin;
further mixing of (A)+(B) in a metal box with pneumatic transport of the fibers to the carding station;
pneumatic loading into a carding machine for process spinning and formation of each (A)+(B) web;
double-stage folding in which the overlapping layers are worked in synchrony with the layering motion of webs;
coupling of the non-woven fabric , TNT, (C), composed of (d)+(e)+(f), in which (d): 80% Polyester Fiber (PES) in black colour, 1.4 denier count and fiber length 51 mm;
(e) : 15% Viscose Staple (VIS) black in color 1.4 denier count and fiber lenght 32 mm ;
(f) : 5% oxidized carbon fiber (PanOX); on the two external sides of the composite mat (A)+(B);
once the (A)+(B)+(C) composite has been obtained, it is heated in an air drying oven, at a temperature of 190° to 210°;
cooling of the mat and thermosetting obtained with a water-cooled calender at 5°;
cutting into sheets using a guillotine cutter, according to the desired size.

7. Process for obtaining a semi finished multilayer panel in synthetic fibers **characterized by** the fact that the semi-finished panel is thermoformed to obtain a component for the transport or industrial sector, with the following phases continuing the production process: Loading of the semi-finished panel into a drying/heating oven, with Convective/Radiation technology, with opposing hot plates, with independent emission zones;
Heating of the panel with an appropriate cycle Times / Temperatures / Radiation zones, regulated by the process parameters:
Automatic exit of the hot panel from the oven, via chain belt, with an average surface temperature of approximately 190°C ;
Positioning of the hot panel in a thermoregulated mold placed under a press, modeled on the basis of the design of the component to be made;
Possible application and direct coupling of aesthetic fabrics or laminates, of different nature, on the component before forming in the press;
Pressing and forming, in the mold, of the panel for the time necessary for the dimensional thermal stabilization of the component; contemporary shearing of the edges and/or dowels, out of figure.

8. Process for obtaining semi finished multilayer panel in synthetic fibers as in claim 7) **characterized by** the fact that for heating a semi-finished panel of 120 kg/m2 in the oven, the following parameters are used:
Average upper plate temperature 320°C;
Upper irradiation adjustment with inverse proportional rings 50% Center, 100% Edge;
Lower plate average temperature 220°C;
Lower radiation adjustment with inverse proportional rings 30% Center, 80% Edge;
Upper Hot Plate / Panel Distance = 80mm;
Bottom Hot Plate / Panel Distance = 15mm;
Cycle time 180 seconds.
